# EUROPÄISCHE PATENTSCHRIFT

(11) **EP 1 553 057 B1**
(45) Veröffentlichungstag und Bekanntmachung des Hinweises auf die Patenterteilung: **04.04.2007**
(21) Anmeldenummer: 04028981.1
(22) Anmeldetag: 07.12.2004
(51) Int. Cl.: C02F 3/28

(54) **Verfahren und Vorrichtung zur biologischen Behandlung einer Suspension in einem Bioreaktor mit integrierter hydraulischer Schwimmschlammbehandlung**
Method and apparatus for biological treatment of a suspension in a bioreactor with integrated hydraulic treatment of floating sludge
Procédé et dispositif de traitement biologique d'une suspension dans un bioréacteur avec prélèvement hydraulique intégré des boues de natation

(30) Priorität: 11.12.2003 DE 10358399
(43) Veröffentlichungstag der Anmeldung: 13.07.2005
(73) Patentinhaber: LINDE-KCA-Dresden GmbH, 01277 Dresden (DE)
(72) Erfinder: Büchner, Thomas, 01731 Kreischa (DE); Herms, Matthias, 01277 Dresden (DE); Langhans, Gerhard, Dr., 01159 Dresden (DE)

(56) Entgegenhaltungen:
- US-A- 5 089 118
- US-A- 5 942 116

## Beschreibung

Die Erfindung betrifft ein Verfahren zur biologischen Behandlung einer Suspension in einem Bioreaktor, bei dem zur Umwälzung der Suspension zumindest ein Teil der Suspension durch eine vertikal ausgerichtete Leitzone geleitet wird, sodass eine bis in den Bereich der Suspensions-Füllstandshöhe sich erstreckende oder von diesem Bereich ausgehende vertikale Strömung zumindest eines Teils der Suspension erzeugt wird, sowie eine Vorrichtung zur Durchführung des Verfahrens.

Verfahren zur biologischen Behandlung von Suspensionen sind z. B. aerobe oder anaerobe Verfahren zur biologischen Abwasser-, Klärschlamm- oder Abfallbehandlung, bei denen in der Suspension enthaltene biologisch abbaubare Substanzen mittels Mikroorganismen abgebaut werden.

Unter Verfahren zur Biogasgewinnung soll im Folgenden die anaerobe Behandlung von biologisch abbaubare Stoffe enthaltenden Suspensionen, insbesondere die Vergärung von Abfällen oder die Schlammfaulung bei der Behandlung von Klärschlämmen, zu verstehen sein. Dabei werden die biologisch abbaubaren Stoffe, die auch als Gärmedium bezeichnet werden, in einem als Gärreaktor bezeichneten Bioreaktor unter Luftabschluss zu Biogas vergoren. Zur Durchmischung des Gärmediums im Gärreaktor werden häufig mechanische Rührsysteme oder hydraulische Umpumpsysteme eingesetzt. Auch eine Gaseinpressung in Bodennähe des Gärreaktors wird verschiedentlich verwendet.

Bei sogenannten Schlaufenreaktoren wird in ein innerhalb des Gärreaktors angeordnetes zentrisches Leitrohr ein Gas injiziert, wodurch das Gärmedium in das Leitrohr gezogen wird. Auf diese Weise kann z. B. Gärmedium aus Bodennähe des Gärreaktors bis zur Oberfläche des im Gärreaktor befindlichen Gärmediums durch das Leitrohr gefördert werden. Somit kann zumindest ein Großteil des Gärmediums im Gärreaktor umgewälzt werden. Ein solches System ist z. B. in der DE 197 25 823 A1 beschrieben. Dieses System bietet neben dem wesentlichen Merkmal, dass keine bewegten Teile im Gärreaktor vorhanden sind, noch weitere Vorteile: Beispielsweise wird eine gradientenarme, gute Durchmischung über die vertikale Schlaufe erreicht. Außerdem wird die Möglichkeit einer Wärmeübertragerintegration in den Gärreaktor in Form eines heizwasserdurchströmten Doppelmantelleitrohres geboten. Durch die Gaseinblasung in die Schlaufenströmung und damit verbundene Oberflächenschwallbildung und turbulentes Untermischen im radial auswärts gerichteten Oberflächenstrom wird darüberhinaus die Bildung einer Schwimmdecke bekämpft. Aufgrund definierter bodennaher Strömungsverhältnisse für den Sedimenttransport in Richtung des zentrischen Bodenabzugs wird schließlich auch die Bildung von Sedimentablagerungen behindert.

Es hat sich jedoch im praktischen Betrieb gezeigt, dass für spezielle Schlamm- und Abfallqualitäten, die dem Gärreaktor anlagenspezifisch zugeführt werden, Schwimmschicht- und Sedimentprobleme auftreten können, die zusätzliche Maßnahmen zur Beherrschung erfordern.

Das betrifft zum einen Schlämme mit höherem Gehalt an Detergenzien und feinfaserigen Kunststoff- und Zellulosepartikeln, wie sie aus der kommunalen Abwasserbehandlung oder speziellen gewerblichen Organikreststoffen resultieren, sowie höherviskose Schlämme, die herkunftsbedingt größere Masseanteile feinen Glasbruchs und anderer unregelmäßig geformter Inertpartikel enthalten.

Für erstere Materialien kann es zu einem flotativen Aufrahmen kommen, mit Ansammlung im Außenbereich der Gärgutoberfläche im Reaktor, wo die radialabklingende Turbulenz nicht mehr für eine Untermischung ausreicht. Bei nicht sandähnlichen Sedimenten (abgerundete Quarzkörner) kann es zu einem Verhaken der Partikel durch ihre unregelmäßigen Bruchkanten kommen, was erhöhten Widerstand gegenüber dem hydraulischen Transport zur zentrischen Bodenentnahme bedeutet.

Der Erfindung liegt die Aufgabe zugrunde, ein Verfahren der eingangsgenannten Art so auszugestalten, dass Schwimmschlammprobleme zuverlässig vermieden werden.

Diese Aufgabe wird erfindungsgemäß verfahrensseitig dadurch gelöst, dass durch Einleiten eines Fluids im Bereich der Suspensions-Füllstandshöhe die Oberfläche der Suspension und/oder auf der Oberfläche der Suspension schwimmender Schwimmschlamm in eine Rotationsströmung versetzt wird. Dabei wird das Fluid bevorzugt als Flüssigkeitsfreistrahl über eine Düse in den Bioreaktor eingeleitet.

Der Grundgedanke der Erfindung besteht also darin, dem gasinduzierten Schlaufenreaktorprinzip ein hydraulisches Strahlsystem zu überlagern. Dadurch können die verfahrenstechnischen Vorteile eines Schlaufenreaktors mit Leitrohr und Gaseinpressung genutzt werden und gleichzeitig medienspezifisch auftretende Problemfälle bekämpft werden, ohne den Energieeintrag in das Bioreaktorsystem signifikant zu erhöhen.

Verfahrenstechnische Berechnungen belegen, dass ein im Bereich der Suspensions-Füllstandshöhe in den Bioreaktor eingestrahlter Flüssigkeitsfreistrahl eine Rotation der oberflächennahen Flüssigkeitsmasse bewirkt. Aus der Überlagerung der in Oberflächennähe von der vertikalen Reaktorschlaufe radial nach außen gerichteten Strömung mit der durch den Flüssigkeitsfreistrahl induzierten Strömung stellt sich eine Rotationsströmung um das Reaktorzentrum ein.

Erfindungsgemäß erfolgt eine intensivierte Schwimmschlammbehandlung über Düsensysteme, die oberflächennah am Behälterumfang angeordnet sind. Dabei wird das aus dem Bioreaktor abgesaugte Fluid teilweise oder in zeitlicher Abfolge über mindestens eine im Bereich der Suspensions-Füllstandshöhe vorgesehene Düse derart in den Bioreaktor eingeleitet, dass die Oberfläche der Suspension und/oder auf der Oberfläche der Suspension schwimmende Schwimmschlamm in eine Rotationsströmung versetzt wird.

Vorzugsweise wird das Fluid über tangential am Behälterumfang angeordnete Düsen in den Bioreaktor eingeleitet. Dabei wird zweckmäßigerweise als Fluid ein Teil der Suspension verwendet, der aus dem Bioreaktor abgesaugt wird. Die Düsen werden bevorzugt zeitlich versetzt mit dem Fluid beaufschlagt. Besonders bevorzugt werden die Düsen mit einer gemeinsamen Pumpe betrieben und von dieser mittels zyklischer Umschaltung der Reihe nach beaufschlagt.

Die sich in Nähe des Behälterumfangs anreichernden Schwimmschlamm- und Schaumpartikel haben die Tendenz längerfristig zu verkleben und sich zu verfestigen. Sie müssen deshalb ständig befeuchtet und gleitfähig gehalten werden, sind im Verbund aufzulockern und von adhäsiv anhaftenden Gasbläschen zu befreien, um den Auftrieb zu vermindern. Gegebenenfalls muss eine Ausschleusung in Oberflächennähe möglich sein.

Eine komplette Bekämpfung über den gesamten Reaktorumfang ist technologisch nicht sinnvoll, da insbesondere stählerne Gärreaktoren meist nicht für einen Flüssigkeitsstand im Bereich der Dachschräge festigkeitsmäßig ausgelegt sind. Damit entspricht die freie Flüssigkeitsoberfläche der Querschnittsfläche des zylindrischen Reaktorteils.

Gemäß einer besonders bevorzugten Ausführungsform der Erfindung wird das Problem so gelöst, dass die durch die radiale Oberflächenströmung von der Leitzone zum Behälterrand außen ringförmig zusammengeschobene Schwimmdecke hydraulisch durch bevorzugt mindestens zwei am Behälterumfang tangential angeordnete Düsen mit Flüssigkeitsfreistrahlen beaufschlagt und mittels des übertragenen Impulses in Rotation versetzt wird. Dabei läuft der Schwimmschlammring durch die Strahlzonen und wird dabei in der gewünschten Weise befeuchtet und aufgelockert.

Ein radial an der Behälterinnenwand befestigter Schwimmschlammabzug mit abschieberbarer Fallleitung in Höhe der Flüssigkeitsoberfläche ermöglicht zweckmäßigerweise die bedarfsweise Entnahme vom Schwimmgut, das nicht mehr in die Suspension einrührbar ist. Durch Füllstandsänderung im Bioreaktor können die Bedingungen so eingestellt werden, dass entweder die Schwimmdecke über dem Abzug rotiert oder das Material chargenweise in den Abzugskasten eingeschoben wird.

Hierzu ist bevorzugt eine Düse in solchem Abstand vor dem Schwimmschlammabzug angeordnet, dass sie mit noch ausreichendem Impuls das Material in den Abzugskasten schwemmt. Gegenüberliegend ist bevorzugt eine zweite Düse angeordnet, die für Bewegung und Befeuchtung sorgt. Der Betrieb beider Düsen erfolgt zweckmäßigerweise ebenfalls zyklisch.

Vorzugsweise wird das Fluid mit einer Strömungsgeschwindigkeit von 10 bis 15 m/s und einem Volumenstrom von 300 bis 600 m³/h in den Bioreaktor eingeleitet.

Neben dem Verfahren zur Biogasgewinnung betrifft die Erfindung auch eine Vorrichtung zur biologischen Behandlung einer Suspension mit einem Bioreaktor zur Aufnahme der Suspension, wobei im Innenraum des Bioreaktors eine bis in den Bereich der Suspensions-Füllstandshöhe reichende Leiteinrichtung mit vertikaler Ausrichtung zur Umwälzung der Suspension angeordnet ist.

Vorrichtungsseitig wird die gestellte Aufgabe erfindungsgemäß dadurch gelöst, dass im Bereich der Suspensions-Füllständshöhe mindestens eine Düse zur Einleitung eines Fluids in den Bioreaktor angeordnet ist.

Die Düse ist zweckmäßigerweise über eine mit dem Innenraum des Bioreaktors verbundene Zuleitung und eine Pumpe mit der Suspension beaufschlagbar. Bevorzugt sind mehrere Düsen in Oberflächennähe am Bioreaktorumfang verteilt, zweckmäßigerweise mit tangentialer Ausrichtung, angeordnet. Dabei stehen die Düsen vorzugsweise mit einer gemeinsamen Pumpe in Verbindung. Die Düse weist zweckmäßigerweise einen Durchmesser von 50 bis 120mm auf.

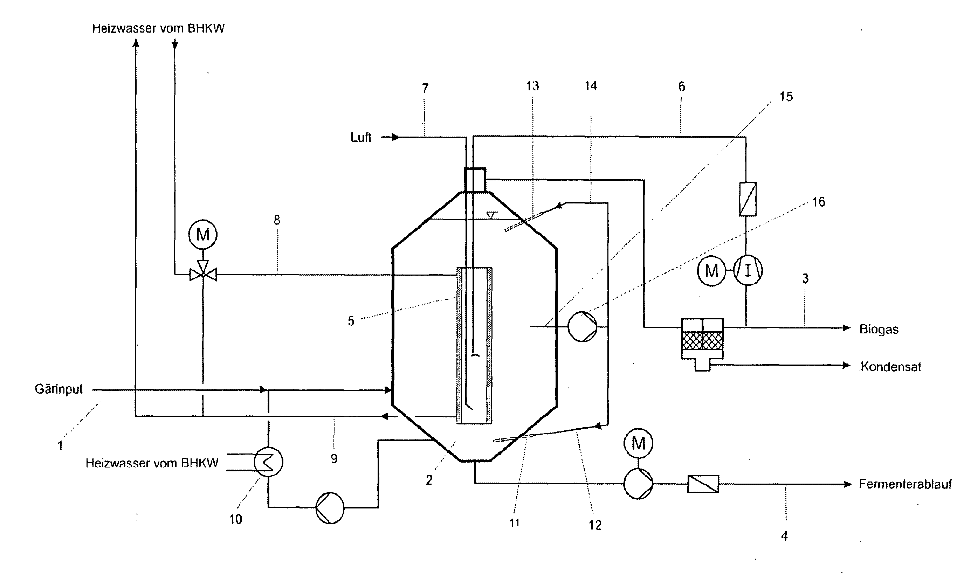

Im Folgenden soll die Erfindung anhand eines in der Figur schematisch dargestellten Ausführungsbeispiels näher erläutert werden.

In der Figur ist beispielhaft eine Anlage zur Vergärung von Nassmüll dargestellt. Der Nassmüll wird in in der Figur nicht gezeigten Vorbehandlungsschritten so aufbereitet, dass Pulpe bzw. Hydrolysat entstehen. Die Pulpe bzw. das Hydrolysat werden als mit Gärmedium bezeichnete Suspension über Leitung 1 dem als Gärreaktor 2 bezeichneten Bioreaktor zugeführt. Im Gärreaktor 2 wird die Methanisierung der Pulpe bzw. des Hydrolysats durchgeführt. Hierzu wird der Gärreaktor 2 unter anaeroben Bedingungen gehalten und der Gärreaktorinhalt umgewälzt. Die in der gärenden Pulpe bzw. dem Hydrolysat enthaltene anaerobe Biomasse wandelt die organischen Substanzen teilweise in Kohlendioxid und Methan um. Das anfallende Biogas wird über Leitung 3 aus dem Gärreaktor 2 abgezogen.

Da die Pulpe bzw. das Hydrolysat auch Schwefelverbindungen enthalten, würde ohne weitere Maßnahme auch H₂S gebildet, das sich schließlich im Biogas wiederfinden würde. Um die unerwünschten H₂S Anteile im Biogas zu minimieren, wird der gesamte Gärreaktorinhalt definiert durch eine sauerstoffhaltige Zone 5 mit ausreichender Kontaktzeit zwischen sauerstoffhaltigem Gas und Gärmedium gefördert. Zu diesem Zweck ist der Gärreaktor 2 als Schlaufenreaktor mit innenliegender Schlaufe in Form eines zentrisch, vertikal angeordneten Leitrohres 5, das als sauerstoffhaltige Zone fungiert, gestaltet. Dabei dient in den unteren Teil des Leitrohrinnenraumes gepumptes Biogas, das über eine Biogaszweigleitung 6 von der Biogasableitung 2 abgezweigt wird, als Treibgas. Infolge der Gemischdichteabsenkung im Leitrohr 5 und der Gasauftriebkraft wird das Gärmedium von unten nach oben durch das Leitrohr 5 gefördert. Dabei werden die hydraulischen Verhältnisse durch Wahl der Leitrohrgeometrie und des eingepressten Biogasstromes der Gestalt eingestellt, dass der gesamte Gärreaktorinhalt mindestens zweimal pro Stunde durch das Leitrohr 5 gepumpt wird. In den inneren Aufstrom des Leitrohres 5 wird Luft mittels einer Luftzuleitung 7 in solchen Mengenverhältnissen dosiert, dass das Gärmedium während der Passage des Leitrohres 5 ausreichend Sauerstoffkontakt bekommt, um die H₂S-Bildung in ihren Stoffwechselprozessen in der gewünschten Weise zu limitieren. Gleichzeitig wird der Sauerstoff biochemisch soweit abgebaut, dass im Biogas keine prozessbeeinträchtigenden Sauerstoffanteile mehr vorhanden sind. Der Luftbedarf kann dabei so minimiert werden, dass der Stickstoff im Biogas nicht zu einer signifikanten Gasqualitätsminderung für die weitere kalorische Nutzung führt. Zur Aufrechterhaltung einer für die biologische Behandlung des Gärmediums optimalen Betriebstemperatur ist das Leitrohr 5 beheizbar ausgebildet. Hierzu ist das Leitrohr 5 mit einem doppelwandigen Mantel versehen, der eine Zuführung 8 und eine Abführung 9 für Heizwasser aufweist. Zusätzlich kann der Gärreaktorinhalt mittels eines außenliegenden Wärmetauschers 19, der von Heizwasser durchflossen wird, temperiert werden.

Zur Bekämpfung von medienspezifisch auftretenden Problemfällen, insbesondere bei speziellen Schlamm- und Abfallqualitäten entstehenden Sedimentproblemen, wird dem gasinduzierten Schlaufenreaktorprinzip ein hydraulisches Strahlsystem überlagert. Auf diese Weise können die verfahrenstechnischen Vorteile des Schlaufenreaktors mit Leitrohr 5 und Gaseinpressung 7 genutzt werden und gleichzeitig medienspezifisch auftretende Probleme gelöst werden, ohne den Energieintrag in das Gärsystem signifikant zu erhöhen. Zu diesem Zweck wird über Leitung 15 und Pumpe 16 Gärmedium aus dem Gärreaktor 2 abgezogen und über Leitung 12 einer Düse 11 zugeführt.

Über die Düse 11 wird das Gärmedium als Flüssigkeitsfreistrahl mit einer Düsengeschwindigkeit von 10 bis 15m/s und einem Volumenstrom vom 300 bis 600m³/h im bodenahen Bereich in den Gärreaktor 2 eingeleitet. Bei Gärreaktoren bis 8000m³ Reaktionsvolumen und Durchmessern bis 24m wird auf diese Weise der notwendige Impulsstrom erzeugt, um die bodennahe Flüssigkeitsmasse mit ca. 0,5 m/s nahe der Behälterwand rotieren zu lassen. Dabei ist die Düse 11, die einen Durchmesser von 50 bis 120mm aufweist, in Abhängigkeit von Behältergröße und Prozessparametern um 40 bis 60° zum Radiusstrahl ausgestellt, um das Drehmoment zu indizieren. Ein Neigungswinkel der Düse 11 zur Horizontalen zwischen 0 und 10° kompensiert die medienbedingten Auftriebskräfte im Strahlfeld. In der Praxis sind über den gesamten Gärreaktor-Behälterumfang je nach Reaktorgröße zwischen zwei und fünf Düsen in entsprechenden Abständen am Umfang angeordnet. Der Übersichtlichkeit wegen ist in der Figur nur eine Düse 11 dargestellt. Alle installierten Düsen sind mit einer einzigen Pumpe, nämlich Pumpe 16, verbunden und werden von dieser mittels zyklischer Umschaltung der Reihe nach beaufschlagt. Das ermöglicht eine effiziente und wartungsarme Betriebsweise.

Um Schwimmschlammprobleme zu bekämpfen, führt von der Pumpe 16 eine Zweigleitung 14 zu einer oberflächennah am Gärreaktor-Behälterumfang angeordnete Düse 13. Die hydraulische Anbindung dieser Düse 13 erfolgt über die Pumpe 16, wenn die Einschaltzyklen als gering eingeschätzt werden und dem Bodensystem ein oder zwei zusätzliche Schaltzyklen zugemutet werden können. Bei medienbedingt häufigem Betrieb der Düse 13 ist eine separate Pumpe vorzuziehen. Wie bei den in Bodennähe angeordneten Düsen 11 ist es auch bezüglich der oberflächennah vorgesehenen Düse 13 empfehlenswert, mehrere Düsen anzuordnen. Der Übersichtlichkeit wegen ist allerdings wieder nur eine Düse 13 in der Figur dargestellt.

## Patentansprüche

1. Verfahren zur biologischen Behandlung einer Suspension in einem Bioreaktor, bei dem zur Umwälzung der Suspension zumindest ein Teil der Suspension durch eine vertikal ausgerichtete Leitzone geleitet wird, so dass eine bis in den Bereich der Suspensions-Füllstandshöhe ausgehende vertikale Strömung zumindest eines Teils der Suspension erzeugt wird, wobei die vertikale Strömung durch die Einpressung eines Gases in die Leitzone induziert wird, **dadurch gekennzeichnet, dass** durch Einleitung eines Fluids im Bereich der Suspensions-Füllstandshöhe die Oberfläche der Suspension und/oder auf der Oberfläche der Suspension schwimmender Schwimmschlamm in eine Rotationsströmung versetzt wird.

2. Verfahren nach Anspruch 1, **dadurch gekennzeichnet, dass** das Fluid über tangential am Behälterumfang angebrachte Düsen in den Bioreaktor eingeleitet wird.

3. Verfahren nach Anspruch 1 und 2, **dadurch gekennzeichnet, dass** als Fluid die Suspension verwendet wird, die aus dem Bioreaktor abgesaugt wird.

4. Verfahren nach Anspruch 2 und 3, **dadurch gekennzeichnet, dass** die Düsen zeitlich versetzt mit dem Fluid beaufschlagt werden.

5. Verfahren nach einem der Ansprüche 2 bis 4, **dadurch gekennzeichnet, dass** die Düsen mit einer gemeinsamen Pumpe betrieben werden und von dieser mittels zyklischer Umschaltung der Reihe nach beaufschlagt werden.

6. Verfahren nach einem der Ansprüche bis 5, **dadurch gekennzeichnet, dass** zumindest ein Teil des auf der Oberfläche der Suspension in der Rotationsströmung schwimmenden Schwimmschlamms über mindestens einen an der Bioreaktorinnenwand vorgesehenen Schwimmschlammabzug im Bereich der Suspensions-Füllstandshöhe entnommen wird.

7. Verfahren nach Anspruch 6, **dadurch gekennzeichnet, dass** der Schwimmschlamm mittels eines in der Nähe des Schwimmschlammabzugs eingeleiteten Fluids in den Schwimmschlammabzug geschwemmt wird.

8. Verfahren nach Anspruch 7, **dadurch gekennzeichnet, dass** gegenüber dem Schwimmschlammabzug ein Fluid eingeleitet wird, das den Schwimmschlamm in Bewegung hält und befeuchtet.

9. Verfahren nach Anspruch 8, **dadurch gekennzeichnet, dass** das Fluid über eine in Nähe des Schwimmschlammabzugs vorgesehene Düse mit einem derartigen impuls eingeleitet wird, dass der Schwimmschlamm in den Schwimmschlammabzug befördert wird.

10. Verfahren nach einem der Ansprüche 1 bis 9, **dadurch gekennzeichnet, dass** das Fluid mit einer Strömungsgeschwindigkeit von 10 bis 15 m/s eingeleitet wird.

11. Verfahren nach einen der Ansprüche 1 bis 10, **dadurch gekennzeichnet, dass** das Fluid mit einer Volumenströmung von 300 bis 600 m³/h eingeleitet wird.

12. Vorrichtung zur biologischen Behandlung einer Suspension mit einem Bioreaktor zur Aufnahme der Suspension, wobei im Innenraum des Bioreaktors eine bis in den Bereich der Suspensions-FüDstandshöhe reichende Leiteinrichtung mit vertikaler Ausrichtung und eine Einrichtung zur Einpressung eines Gases zur Umwälzung der Suspension angeordnet ist, **dadurch gekennzeichnet, dass** im Bereich der Suspensions-Füllstandshöhe mindestens eine Düse zur Einleitung eines Fluids in den Bioreaktor angeordnet ist.

13. Vorrichtung nach Anspruch 12, **dadurch gekennzeichnet, dass** die Düse über eine mit dem Innenraum des Bioreaktors verbundene Zuleitung über eine Pumpe mit der Suspension beaufschlagbar ist.

14. Vorrichtung nach Anspruch 12 und 13, **dadurch gekennzeichnet, dass** mehrere Düsen im Bereich der Suspensions-Füllstandshöhe am Bioreaktorumfang verteilt angeordnet sind.

15. Vorrichtung nach Anspruch 12 bis 14, **dadurch gekennzeichnet, dass** im Bereich der Suspensions-Füllstandshöhe ein radial an der Bioreaktorinnenwand befestigter Schwimmschlammabzug angeordnet ist.

16. Vorrichtung nach Anspruch 15, **dadurch gekennzeichnet, dass** in der Nähe des Schwimmschlammabzugs eine Düse zum Einleiten eines Fluids angeordnet ist.

17. Vorrichtung nach Anspruch 15 und 16, **dadurch gekennzeichnet, dass** auf einer dem Schwimmschlammabzug gegenüberliegenden Seite des Bioreaktors eine Düse zum Einleiten eines Fluids angeordnet ist.

18. Vorrichtung nach einem der Ansprüche 12 bis 17, **dadurch gekennzeichnet, dass** die Düse einen Durchmesser von 50-120 mm aufweist.

## Claims

1. Method for biological treatment of a suspension in a bioreactor in which, for circulation of the suspension, at least a part of the suspension is passed through a vertically oriented guide zone in such a manner that a vertical flow of at least a part of the suspension extending to the region of the suspension height level is generated, the vertical flow being induced by forcing a gas into the guide zone, **characterized in that** by introducing a fluid in the region of the suspension height level the surface of the suspension and/or floating sludge floating on the surface of the suspension is put into rotary flow.

2. Method according to Claim 1, **characterized in that** the fluid is introduced into the bioreactor via nozzles mounted tangentially at the vessel periphery.

3. Method according to Claims 1 and 2, **characterized in that** the fluid used is the suspension which is drawn off from the bioreactor by suction.

4. Method according to Claims 2 and 3, **characterized in that** the nozzles are charged with the fluid at staggered times.

5. Method according to one of Claims 2 to 4, **characterized in that** the nozzles are operated by a shared pump and are charged by this by means of cyclic switching in sequence.

6. Method according to one of Claims 1 to 5, **characterized in that** at least part of the floating sludge floating on the surface of the suspension in the rotary flow is withdrawn in the region of the suspension height level via at least one floating sludge takeoff provided at the bioreactor inner wall.

7. Method according to Claim 6, **characterized in that** the floating sludge is washed into the floating sludge takeoff by means of a fluid introduced in the vicinity of the floating sludge takeoff.

8. Method according to Claim 7, **characterized in that**, opposite the floating sludge takeoff, a fluid is introduced which maintains the floating sludge in motion and moistens it.

9. Method according to Claim 8, **characterized in that** the fluid is introduced via a nozzle provided in the vicinity of the floating sludge takeoff at an impulse such that the floating sludge is transported into the floating sludge takeoff.

10. Method according to one of Claims 1 to 9, **characterized in that** the fluid is introduced at a flow velocity of 10 to 15 m/s.

11. Method according to one of Claims 1 to 10, **characterized in that** the fluid is introduced at a volumetric flow rate of 300 to 600 m³/h.

12. Apparatus for biological treatment of a suspension having a bioreactor for receiving the suspension, in the interior of the bioreactor a guide device extending to the region of the suspension height level and having vertical orientation, and a device for forcing in a gas for circulating the suspension being arranged, **characterized in that** in the region of the suspension height level at least one nozzle is arranged for introducing a fluid into the bioreactor.

13. Apparatus according to Claim 12, **characterized in that** the nozzle can be charged with the suspension by means of a pump via a feed line connected to the interior of the bioreactor.

14. Apparatus according to Claim 12 and 13, **characterized in that** a plurality of nozzles are arranged in the region of the suspension height level distributed on the bioreactor periphery.

15. Apparatus according to Claims 12 to 14, **characterized in that**, in the region of the suspension height level, a floating sludge takeoff is arranged which is attached radially to the bioreactor inner wall.

16. Apparatus according to Claim 15, **characterized in that**, in the vicinity of the floating sludge takeoff, a nozzle for introducing a fluid is arranged.

17. Apparatus according to Claims 15 and 16, **characterized in that**, on the side of the bioreactor opposite the floating sludge takeoff, a nozzle for introducing a fluid is arranged.

18. Apparatus according to one of Claims 12 to 17, **characterized in that** the nozzle has a diameter of 50 - 120 mm.

## Revendications

1. Procédé pour le traitement biologique d'une suspension dans un bioréacteur, dans lequel au moins une partie de la suspension est conduite à travers une zone de guidage orientée verticalement en vue de faire circuler la suspension, de façon à produire un écoulement vertical d'au moins une partie de la suspension jusque dans la région du niveau supérieur de la suspension, dans lequel l'écoulement vertical est induit par l'insufflation d'un gaz dans la zone de guidage, **caractérisé en ce que** la surface de la suspension et/ou les boues de flottation flottant sur la surface de la suspension sont entraînées en un écoulement rotatif par l'introduction d'un fluide dans la région du niveau supérieur de la suspension.

2. Procédé selon la revendication 1, **caractérisé en ce que** le fluide est introduit dans le bioréacteur par des buses installées tangentiellement à la périphérie du récipient.

3. Procédé selon la revendication 1 et 2, **caractérisé en ce que** l'on utilise comme fluide la suspension qui est aspirée hors du bioréacteur.

4. Procédé selon la revendication 2 ou 3, **caractérisé en ce que** les buses sont alimentées en fluide avec un décalage temporel.

5. Procédé selon l'une quelconque des revendications 2 à 4, **caractérisé en ce que** les buses fonctionnent avec une pompe commune et sont alimentées par celle-ci au moyen d'une inversion cyclique selon la série.

6. Procédé selon l'une quelconque des revendications 1 à 5, **caractérisé en ce qu'**au moins une partie des boues de flottation flottant sur la surface de la suspension dans l'écoulement rotatif est prélevée par au moins un extracteur de boues de flottation prévu sur la paroi intérieure du bioréacteur, dans la région du niveau supérieur de la suspension.

7. Procédé selon la revendication 6, **caractérisé en ce que** les boues de flottation sont dirigées dans l'extracteur de boues de flottation au moyen d'un fluide introduit à proximité de l'extracteur de boues de flottation.

8. Procédé selon la revendication 7, **caractérisé en ce que** l'on introduit en face de l'extracteur de boues de flottation un fluide qui garde en mouvement et humidifie les boues de flottation.

9. Procédé selon la revendication 8, **caractérisé en ce que** l'on introduit le fluide par une buse prévue à proximité de l'extracteur de boues de flottation, avec une impulsion telle que les boues de flottation soient envoyées dans l'extracteur de boues de flottation.

10. Procédé selon l'une quelconque des revendications 1 à 9, **caractérisé en ce que** l'on introduit le fluide avec une vitesse d'écoulement de 10 à 15 m/s.

11. Procédé selon l'une quelconque des revendications 1 à 10, **caractérisé en ce que** l'on introduit le fluide avec un débit en volume de 300 à 600 m³/h.

12. Dispositif pour le traitement biologique d'une suspension avec un bioréacteur destiné à contenir la suspension, dans lequel un dispositif de guidage orienté verticalement s'étendant jusque dans la région du niveau supérieur de la suspension et un dispositif pour l'insufflation d'un gaz sont disposés dans la chambre intérieure du bioréacteur en vue de faire circuler la suspension, **caractérisé en ce qu'**au moins une buse pour l'introduction d'un fluide dans le bioréacteur est disposée dans la région du niveau supérieur de la suspension.

13. Dispositif selon la revendication 12, **caractérisé en ce que** la buse peut être alimentée avec la suspension au moyen d'une pompe par une conduite d'alimentation raccordée avec la chambre intérieure du bioréacteur.

14. Dispositif selon la revendication 12 et 13, **caractérisé en ce que** plusieurs buses réparties à la périphérie du bioréacteur sont disposées dans la région du niveau supérieur de la suspension.

15. Dispositif selon la revendication 12 à 14, **caractérisé en ce qu'**un extracteur de boues de flottation fixé radialement à la paroi intérieure du bioréacteur est disposé dans la région du niveau supérieur de la suspension.

16. Dispositif selon la revendication 15, **caractérisé en ce qu'**une buse pour l'introduction d'un fluide est disposée à proximité de l'extracteur de boues de flottation.

17. Dispositif selon la revendication 15 et 16, **caractérisé en ce qu'**une buse pour l'introduction d'un fluide est disposée sur un côté du bioréacteur opposé à l'extracteur de boues de flottation.

18. Dispositif selon l'une quelconque des revendications 12 à 17, **caractérisé en ce que** la buse présente un diamètre de 50 - 120 mm.
